# EUROPEAN PATENT SPECIFICATION

(11) **EP 3 748 391 B1**
(45) Date of publication and mention of the grant of the patent: **24.01.2024**
(21) Application number: 20175511.3
(22) Date of filing: 19.05.2020
(51) Int. Cl.: G01S 7/40, G01S 7/41, G01S 13/88, G08B 29/04

(54) **A METHOD FOR DETECTING A MASKING CONDITION IN A DEVICE FOR DETECTING TARGETS IN AN ENVIRONMENT**
VERFAHREN ZUR ERKENNUNG EINES VERDECKUNGSZUSTANDS VON EINEM GERÄT ZUR DETEKTION VON ZIELOBJEKTEN IN EINER UMGEBUNG
PROCEDE DE DETECTION D'UN ETAT D'OCCLUSION D'UN DISPOSITIF DE DETECTION DE CIBLES DANS UN ENVIRONNEMENT

(30) Priority: 21.05.2019 IT 201900007042
(43) Date of publication of application: 09.12.2020
(73) Proprietor: Inxpect S.p.A., 25131 Brescia (BS) (IT)
(72) Inventor: Bertacchini, Ugo, 25131 Brescia BS (IT); Degani, Alessio, 25131 Brescia BS (IT); Garatti, Marco, 25131 Brescia BS (IT); Nava, Lorenzo, 25131 Brescia BS (IT); Radaelli, Matteo, 25131 Brescia BS (IT); Tartaro, Andrea, 25131 Brescia BS (IT)
(74) Representative: Perani & Partners S.p.A.

(56) References cited:
- EP-A1- 3 460 506
- EP-A1- 3 467 539
- US-A- 5 608 377
- US-A- 5 614 911

## Description

### Field of the invention

The present invention relates to a method of detecting a masking state of a device for detecting a target in an environment. The device is masked when any opaque objects are placed in front of the device. Such opaque objects may partially or entirely preclude the ability to detect targets.

### Background art

Systems for detecting objects in an environment, such as radar systems, can transmit an electromagnetic signal into an environment to be monitored and receive a signal reflected from the objects to identify their position in the environment, within the field of view of the device, using one or more sensors.

These systems can be used for safety, both in intrusion alarms and for personnel safety in factories in which hazards occur when moving too close to certain machinery having moving parts.

These applications require the device to properly detect the targets to prevent break-ins or dangerous conditions for machine operating personnel.

One example of a method of detecting a masking state is disclosed in US 5 608 377.

US 5 614 911 and EP 3 460 506 disclose methods of detecting a masking state of a device for detecting a target in an environment as defined in the preamble of claim 1.

### Problem of the prior art

In certain situations, one or more sensors of the device may be masked when objects that are opaque to the transmitted signal are placed near the sensors within their field of view. These objects reflect the signal transmitted toward the device and prevent it from reaching the back areas of the field of view. Therefore, the device is no longer able to detect targets, if any, behind the masking object with respect to the device.

In intrusion alarm systems used by private individuals, if someone masks the device to circumvent monitoring, the device must send an alarm signal indicating the masking operation. In industrial applications, any accidental or deliberate masking must be likewise identified for the device to be able to identify human movements and set machinery in safe mode when operators enter the protected area, i.e. the area near machinery having moving parts.

Nevertheless, certain known detection systems are unable to detect masking. This does not enable identification of device malfunction caused by partial or complete screening of the field of view of the device. Therefore, such systems are not able to promptly indicate dangerous situations.

### SUMMARY OF THE INVENTION

The present invention has the object to solve the aforementioned prior art problems, and in particular to provide a method of detecting a masking state of a device in a field of view for detecting targets in an environment.

This and other objects are fulfilled by a method of detecting a masking state as defined in any of the accompanying claims. In particular, the device checks whether masking has taken place, whereby it is unable to detect targets, by generating and receiving electromagnetic signals, from which a detection profile is obtained. The check is carried out in a subrange of the field of view of the device. In particular, the field of view is delimited by a minimum distance and a maximum distance. The subrange, on the other hand, extends from the minimum distance to an intermediate distance, which preferably does not exceed 1 meter, which is included in the range between the minimum distance and the maximum distance.

During the first detection, an original reception signal is acquired from which an original detection profile is obtained. This original detection profile is taken as the original reference function, which can be retained for all subsequent cycles or may be periodically updated. Then, at each detection cycle, a reception signal is detected, which is used to derive a respective detection profile. Each detection profile is compared with the reference function in the subrange. If the detection profile differs to a significant extent from the reference function for a number of times that exceeds a threshold number, a masking signal is generated. In certain embodiments, even if the above conditions are met, a masking signal is not generated if, by analyzing a sequence of detection profiles, the sequence is found to converge toward the reference function.

The convergence analysis on the sequence of detection profiles prevents false alarms if the device is turned off and then turned on again. That is, when the device is switched on, a warming up period may occur in which conditioning and processing of the signal transmitted and received provide values other than the typical operating values of the device in steady state. Therefore, without such expedient, the detection profile values may be above or below the reference function, even when the device is not masked.

In the preferred embodiment, the reference function is updated at each detection cycle using the detection profile of the same cycle if the detection profile does not differ from the previous reference function by more than one predetermined variation.

In addition, the method calculates time derivative values for the sequence of detection profiles. If a sign change occurs between each time derivative value and the value respectively next a number of times greater than a sign change threshold value, then a masking signal is generated. By this arrangement, a true masking operation may be distinguished from a state in which the detection profile values increase in the sub-range due to weather events such as rain.

The method may also include removing a background profile from the detection profile. The background profile represents objects that do not move in the field of view of the device. This removal takes place at each cycle after comparison between the detection profile and the reference function in the sub-range. Thus, masking is detected even when background is cyclically updated to recognize new stationary objects in the environment.

### DETAILED DESCRIPTION

The present invention discloses a method of detecting a masking state of a device for detecting targets in an environment to be monitored. The detection system is preferably a radar system.

The method includes executing at least one detection cycle, preferably a sequence of detection cycles. At each detection cycle, the detection device transmits electromagnetic signals within a field of view through an antenna. In particular, the field of view of the device extends from a minimum distance to a maximum distance. This maximum distance may be more than 3 meters. In certain embodiments, this distance may be more than 10 meters. On the other hand, the minimum distance may also be zero, i..e. coinciding with the position of the detection device.

Then, at each cycle the signals are reflected from the environment and are received by the device. The received signals are mixed with the transmitted signals. Then, the mixed signals are processed to obtain a baseband signal, with known techniques. The baseband signal has a frequency that is equal to the difference between the frequencies of the transmitted signals and the received signals.

Later, the baseband signal is processed to generate, for each cycle, a respective detection profile with well-known methods, e.g. comprising a Fourier transformation. The detection profile provides the amplitude values of the reflected signal as a function of the distance from the device. It shall be noted that the known methods of calculating the detection profiles generally provide amplitude values only in a specific range of distances, which depends on various factors including the sampling rate of the received signal and the number of sampled signal values. The field of view of the device may be identified with such a range, which therefore extends from the minimum distance to the maximum distance.

The detection profile is analyzed to check that the device is not masked. This check is carried out over a sub-range of the field of view. In particular, the sub-range extends from the minimum distance to an intermediate distance between the minimum distance and the maximum distance. In the preferred embodiment, the intermediate distance does not exceed 1 meter and preferably does not exceed 50 cm from the device. Furthermore, the ratio of the length of the field of view to the length of the sub-range is preferably 3 or more.

The check over the sub-range allows objects to be detected where the opaque objects involved in masking are typically placed.

Such masking check is carried out by comparing the detection profile with a reference function in the subrange. The reference function represents an amplitude threshold beyond which a masking object is believed to be present. In the preferred embodiment, this reference function is first automatically obtained from a first detection, which precedes the subsequent sequence of detection cycles.

During the first detection, an original reception signal is acquired and converted to baseband. The original baseband signal is processed to generate an original detection profile in the subrange of the field of view. Therefore, the original detection profile is taken as the original reference function. Later, the reference function may remain unchanged, i.e. be always equal to the original reference function, or be periodically updated, as discussed below.

As mentioned above, in one embodiment the original reference function can be used at each detection cycle. Then, each detection profile of each detection cycle is compared with the same reference function.

However, in the preferred embodiment, the original reference function may be periodically updated. Here, at each detection cycle, the reference function is updated with respect to the previous reference function. In particular, a sequence of reference functions is obtained, each updated with respect to the previous one starting from the original reference function. The reference function is updated using the detection profile of the current detection cycle, if this detection profile does not differ from the reference function by more than one predetermined variation. Therefore, the reference function will not be obviously updated using the detection profile if the detection profile can be representative of a masking condition.

In one example, the reference function may be updated by replacing the previous reference function with the reference profile of the respective cycle. In other examples, the reference function is replaced by an average of the detection profiles of a predetermined number of cycles, or an average of the detection profile of the current cycle and one or more previous reference functions.

In one embodiment, a masking signal is already generated if the detection profile assumes at least a value that differs from the reference function in the subrange by more than a predetermined difference, even at a single detection cycle.

However, in the preferred embodiment, a first predetermined time interval is allowed to elapse before generating a masking signal. Therefore, the masking signal is generated only if the number of times that the detection profile in the subrange is different from the reference function exceeds a predetermined threshold number in that time interval. In particular, the number of times that the detection profile is different from the reference function in the subrange is calculated by means of a monitoring counter which is incremented at each cycle if the detection profile is different from the reference function.

In the preferred embodiment, if the detection profile differs from the reference function in the subrange, a sequence of detection profiles may be analyzed to check whether the sequence converges toward the reference function or not. Only when the sequence does not converge, i.e. only when diverges or remains stable over time, a masking signal is generated. In particular, the sequence must converge at least with a predetermined rate of convergence. Thus, the signal is generated only when the rate of convergence is less than a predetermined threshold rate. If the rate of convergence is less than the threshold rate, the sequence will be deemed to be stable over time.

The rate of convergence may be calculated, for example, as a maximum value or a medium value of the detection profile in the subrange approaching to the reference function between two consecutive detection cycles. An alternative indicator of the rate of convergence may be inversely proportional to the number of detection profiles that are required to attain the reference function.

This can avoid the occurrence of false alarms caused by warming up of the device, which may provide detection profiles above or below the reference function, once it has been turned on, even when no real masking has taken place.

Optionally, a measure is provided to ensure that weather events such as rain will not be mistaken for masking and will not generate false alarms. For example, if a few drops deposit in front of the device, they alter the detection profile possibly to a significant extent and may increase it above the reference function. Moreover, they might remain on the device and stably change the detection profile, thereby meeting all the conditions that have been set up to recognize masking. Nevertheless, these drops may be recognized by analyzing the sign values of the time derivatives of the detection profile. That is, the drops cause such time derivative to continuously change in sign. This does not happen in the case of real masking.

Therefore, in one embodiment, the method may calculate time derivative values for the sequence of detection profiles. A check is carried out on whether sign changes occur between each time derivative value and its respective subsequent value. Only if the number of such sign changes is less than a sign change threshold value, a masking signal is generated.

The method may also include removing a background profile from the detection profile, using known techniques. The background profile represents objects that do not move in the field of view of the device, i.e. objects that are stably present in the environment and for which no alarm signal are usefully generated, such as walls, plants or furniture. As the background detection profile is removed from the detection profile, a difference profile is generated. Regardless of mask recognition, the device may locate moving objects in the environment after background profile removal, i.e. by analyzing the difference profile.

In certain embodiments, the background profile is stored in the control unit and remains constant throughout all the detection cycles. Alternatively, the background profile is cyclically updated, i.e. calculated as an average of the detection profiles acquired over the previous cycles. Here, background updating allows new stationary objects to be recognized in the environment, without requiring their presence to be notified, as if they were targets foreign to the environment.

The step of comparing the detection profile with the reference function in the subrange precedes, at each cycle, the step of removing the background profile from the detection profile. In other words, what is compared with the reference function in the subrange is the detection profile, and not the difference profile.

Thus, masking is detected even when the background is cyclically updated to recognize new stationary objects in the environment, thereby avoiding the risk that a masking object stably placed in front of the device might not be indicated because it is part of the background.

## Claims

1. A method of detecting a masking state of a device for detecting a target in an environment, the detection device being configured to generate transmission signals and receive reception signals in a field of view, said field of view extending from a minimum distance to a maximum distance, said method comprising the steps of:
- providing a reference function of the signal amplitude versus the distance from the detection device in a subrange of said field of view, which extends from the minimum distance to an intermediate distance between the maximum distance and the minimum distance by performing a first detection for acquiring an original reception signal, by obtaining an original detection profile and by assuming the original detection signal in the subrange as the original reference function,
- detecting a reception signal after the first detection cycle and deriving a detection profile,
- comparing the detection profile with the reference function in the subrange,
- performing a sequence of detection cycles, thereby detecting a plurality of reception signals and deriving respective detection profiles, **characterized in that** it comprises the step of:
- if a detection profile assumes a value that differs from the reference function in the subrange by more than a predetermined difference, analyzing the sequence of detection profiles to find whether the sequence converges toward the reference function, and generating a masking signal only if the sequence diverges from the reference function or is stable with time.

2. The method as claimed in claim 1, comprising
- removing a background profile, representing stationary objects in the field of view of the device, from the detection profile,
- identifying moving objects after removal of the background profile,
wherein the step of comparing the detection profile with the reference function in the subrange precedes the step of removing the background profile from the detection profile.

3. A method as claimed in claim 1 or 2, wherein providing the reference function comprises updating a previous reference function at each detection cycle, from the original reference function, using the detection profile, if the detection profile does not differ from the previous reference function by more than a predetermined difference.

4. A method as claimed in claim 3, wherein a masking signal is generated only if, in a first predetermined time interval, a number of times in which the detection profile assumes a value that differs from the reference function in the subrange by more than a predetermined difference, exceeds a threshold number.

5. A method as claimed in claim 4 wherein the number of times in which the detection profile assumes a value that differs from the reference function in the subrange by more than a predetermined difference is calculated by means of a control counter which is incremented at each cycle if the detection profile assumes a value that differs from a reference function by more than a predetermined difference.

6. A method as claimed in any of claims 1 to 5, comprising:
- calculating time derivative values in the subrange for the sequence of detection profiles,
- counting the number of times in which a sign change occurs between each time derivative value and its respective next time derivative value in a second predetermined time interval,
- generating a masking signal only if such number of times is smaller than a threshold sign-change value.

7. A method as claimed in any of the preceding claims, wherein said intermediate distance does not exceed 1 meter, and preferably does not exceed 50 cm.

## Patentansprüche

1. Verfahren zum Erfassen eines Maskierungszustands einer Vorrichtung zum Erfassen eines Ziels in einer Umgebung, wobei die Erfassungsvorrichtung konfiguriert ist, um Sendesignale zu erzeugen und Empfangssignale in einem Sichtfeld zu empfangen, wobei sich das Sichtfeld von einer minimalen Entfernung zu einer maximalen Entfernung erstreckt, das Verfahren umfassend die folgenden Schritte:
- Bereitstellen einer Referenzfunktion der Signalamplitude bezogen auf den Abstand von der Erfassungsvorrichtung in einem Teilbereich des Sichtfelds, der sich von dem minimalen Abstand bis zu einem Zwischenabstand zwischen dem maximalen Abstand und dem minimalen Abstand erstreckt, durch Ausführen einer ersten Erfassung zum Erfassen eines ursprünglichen Empfangssignals, durch Erlangen eines ursprünglichen Erfassungsprofils und durch Annehmen des ursprünglichen Erfassungssignals in dem Teilbereich als die ursprüngliche Referenzfunktion,
- Erfassen eines Empfangssignals nach dem ersten Erfassungszyklus und Ableiten eines Erfassungsprofils,
- Vergleichen des Erfassungsprofils mit der Referenzfunktion in dem Teilbereich,
- Ausführen einer Sequenz von Erfassungszyklen, wodurch eine Vielzahl von Empfangssignalen erfasst und entsprechende Erfassungsprofile abgeleitet werden, **dadurch gekennzeichnet, dass** es den folgenden Schritt umfasst:
- wenn ein Erfassungsprofil einen Wert annimmt, der sich in dem Teilbereich um mehr als eine vorbestimmte Differenz von der Referenzfunktion unterscheidet, Analysieren der Sequenz von Erfassungsprofilen, um herauszufinden, ob die Sequenz in Richtung der Referenzfunktion konvergiert, und Erzeugen eines Maskierungssignals, wenn die Sequenz von der Referenzfunktion abweicht oder zeitlich stabil ist.

2. Verfahren nach Anspruch 1, umfassend
- Entfernen eines Hintergrundprofils, das stationäre Objekte in dem Sichtfeld der Vorrichtung darstellt, aus dem Erfassungsprofil,
- Identifizieren sich bewegter Objekte nach Entfernen des Hintergrundprofils, wobei der Schritt eines Vergleichens des Erfassungsprofils mit der Referenzfunktion in dem Teilbereich dem Schritt eines Entfernens des Hintergrundprofils aus dem Erfassungsprofil vorausgeht.

3. Verfahren nach Anspruch 1 oder 2, wobei ein Bereitstellen der Referenzfunktion ein Aktualisieren einer vorherigen Referenzfunktion bei jedem Erfassungszyklus von der ursprünglichen Referenzfunktion unter Verwendung des Erfassungsprofils umfasst, wenn sich das Erfassungsprofil nicht um mehr als eine vorbestimmte Differenz von der vorherigen Referenzfunktion unterscheidet.

4. Verfahren nach Anspruch 3, wobei ein Maskierungssignal nur erzeugt wird, wenn in einem ersten vorbestimmten Zeitintervall eine Anzahl von Malen, in denen das Erfassungsprofil einen Wert annimmt, der sich von der Referenzfunktion in dem Teilbereich um mehr als eine vorbestimmte Differenz unterscheidet, eine Schwellenwertzahl überschreitet.

5. Verfahren nach Anspruch 4, wobei die Anzahl von Malen, in denen das Erfassungsprofil einen Wert annimmt, der sich in dem Teilbereich um mehr als eine vorbestimmte Differenz von der Referenzfunktion unterscheidet, mittels eines Steuerzählers berechnet wird, der bei jedem Zyklus inkrementiert wird, wenn das Erfassungsprofil einen Wert annimmt, der sich um mehr als eine vorbestimmte Differenz von einer Referenzfunktion unterscheidet.

6. Verfahren nach einem der Ansprüche 1 bis 5, umfassend:
- Berechnen von Zeitableitungswerten in dem Teilbereich für die Sequenz von Erfassungsprofilen,
- Zählen der Anzahl von Malen, in denen zwischen jedem Zeitableitungswert und seinem jeweiligen nächsten Zeitableitungswert in einem zweiten vorbestimmten Zeitintervall ein Vorzeichenwechsel auftritt,
- Erzeugen eines Maskierungssignals nur dann, wenn eine solche Anzahl von Malen kleiner ist als ein Schwellenwert für Vorzeichenwechsel.

7. Verfahren nach einem der vorherigen Ansprüche, wobei der Zwischenabstand 1 Meter nicht überschreitet und vorzugsweise 50 cm nicht überschreitet.

## Revendications

1. Procédé de détection d'un état de masquage d'un dispositif de détection d'une cible dans un environnement, le dispositif de détection étant configuré pour générer des signaux d'émission et recevoir des signaux de réception dans un champ de vision, ledit champ de vision s'étendant d'une distance minimale à une distance maximale, ledit procédé comprenant les étapes consistant à :
- fournir une fonction de référence de l'amplitude de signal par rapport à la distance du dispositif de détection dans un sous-intervalle dudit champ de vision, qui s'étend de la distance minimale à une distance intermédiaire entre la distance maximale et la distance minimale en effectuant une première détection pour acquérir un signal de réception d'origine, en obtenant un profil de détection d'origine et en prenant le signal de détection d'origine dans le sous-intervalle comme fonction de référence d'origine,
- détecter un signal de réception après le premier cycle de détection et en déduire un profil de détection,
- comparer le profil de détection avec la fonction de référence dans le sous-intervalle,
- effectuer une séquence de cycles de détection, détectant ainsi une pluralité de signaux de réception et déduisant des profils de détection respectifs, **caractérisé en ce qu'**il comprend l'étape consistant à :
- si un profil de détection prend une valeur qui diffère de la fonction de référence dans le sous-intervalle de plus d'une différence prédéterminée, analyser la séquence de profils de détection pour déterminer si la séquence converge vers la fonction de référence, et générer un signal de masquage si la séquence diverge de la fonction de référence ou est stable dans le temps.

2. Procédé selon la revendication 1, comprenant :
- la suppression d'un profil d'arrière-plan, représentant des objets stationnaires dans le champ de vision du dispositif, du profil de détection,
- l'identification d'objets en mouvement après la suppression du profil d'arrière-plan,
dans lequel l'étape de comparaison du profil de détection avec la fonction de référence dans le sous-intervalle précède l'étape de suppression du profil d'arrière-plan du profil de détection.

3. Procédé selon la revendication 1 ou 2, dans lequel la fourniture de la fonction de référence comprend la mise à jour d'une fonction de référence précédente à chaque cycle de détection, à partir de la fonction de référence d'origine, en utilisant le profil de détection, si le profil de détection ne diffère pas de la fonction de référence précédente de plus d'une différence prédéterminée.

4. Procédé selon la revendication 3, dans lequel un signal de masquage est généré uniquement si, dans un premier intervalle de temps prédéterminé, un nombre de fois où le profil de détection prend une valeur qui diffère de la fonction de référence dans le sous-intervalle de plus d'une différence prédéterminée, dépasse un nombre seuil.

5. Procédé selon la revendication 4, dans lequel le nombre de fois où le profil de détection prend une valeur qui diffère de la fonction de référence dans le sous-intervalle de plus d'une différence prédéterminée est calculé au moyen d'un compteur de commande qui est incrémenté à chaque cycle si le profil de détection prend une valeur qui diffère d'une fonction de référence de plus d'une différence prédéterminée.

6. Procédé selon l'une quelconque des revendications 1 à 5, comprenant :
- le calcul de valeurs de dérivation temporelle dans le sous-intervalle pour la séquence de profils de détection,
- le comptage du nombre de fois où un changement de signe se produit entre chaque valeur de dérivation temporelle et sa valeur de dérivation temporelle suivante respective dans un second intervalle de temps prédéterminé,
- la génération d'un signal de masquage uniquement si ce nombre de fois est inférieur à une valeur seuil de changement de signe.

7. Procédé selon l'une quelconque des revendications précédentes, dans lequel ladite distance intermédiaire ne dépasse pas 1 mètre, et de préférence ne dépasse pas 50 cm.
